# FASCICULE DE BREVET EUROPEEN

(11) **EP 3 146 129 B1**
(45) Date de publication et mention de la délivrance du brevet: **13.09.2017**
(21) Numéro de dépôt: 15797866.9
(22) Date de dépôt: 23.10.2015
(51) Int. Cl.: E04H 4/16, H01R 13/56, H02G 9/12, H01R 39/64

(54) **DISPOSITIF DE GUIDAGE D'UN CÂBLE DE LIAISON A LA SURFACE POUR UN ROBOT IMMERGE**
VORRICHTUNG ZUM FÜHREN EINES OBERFLÄCHENVERBINDUNGSKABELS FÜR EINEN UNTERGETAUCHTEN ROBOTER
DEVICE FOR GUIDING A SURFACE LINK CABLE FOR A SUBMERGED ROBOT

(30) Priorité: 23.10.2014 FR 1460188
(43) Date de publication de la demande: 29.03.2017
(73) Titulaire: Zodiac Pool Care Europe SAS, 75009 Paris (FR)
(72) Inventeur: FAVIE, Louis, F-31470 Colomiers (FR); DELOCHE, Rémi, F-31400 Toulouse (FR)
(74) Mandataire: Ipside
(86) Numéro de dépôt international: PCT/EP2015/074685
(87) Numéro de publication internationale: WO 2016/062890

(56) Documents cités:
- EP-A2- 1 022 411
- EP-A2- 1 207 594
- US-A1- 2002 166 804
- US-A1- 2014 273 541

## Description

### DOMAINE TECHNIQUE

Le domaine de l'invention est le domaine des accessoires pour piscines. Plus précisément, l'invention concerne un dispositif de connexion par câble pour l'alimentation énergétique et la commande d'un robot immergé, notamment un robot pour le nettoyage d'une piscine.

### ÉTAT DE LA TECHNIQUE

Le nettoyage d'un bassin, notamment d'une piscine de loisir, est couramment réalisé par un robot. Selon un exemple de réalisation, un tel robot comprend des moyens moteurs et des moyens de direction permettant de le déplacer et de le diriger en immersion dans l'eau ou le long des parois du bassin, ainsi que des moyens de nettoyage, tels que des moyens d'aspiration ou des moyens de brossage et de balayage, également mus par des moyens moteurs supportés par ledit robot, et dont le fonctionnement est piloté en fonction de la nature de l'opération de nettoyage à réaliser. Un dispositif de commande programmable, ou piloté par un utilisateur, permet de faire réaliser des séquences de nettoyage au robot. Le robot comprend avantageusement des capteurs lui permettant, en retour, de transmettre des informations au dispositif de commande à propos de son environnement ou de son fonctionnement. Ainsi, au cours d'une séquence de nettoyage, ledit robot est immergé et progresse dans tout le volume du bassin alors que son dispositif de commande se trouve à l'extérieur, non immergé. Afin d'échanger des informations avec le dispositif de commande ou d'assurer son alimentation en énergie, le robot est relié à l'extérieur de la piscine, notamment à son dispositif de commande et d'alimentation, par un câble, dit câble de liaison. Selon des exemples de réalisation, ledit câble comprend différentes liaisons, par exemple, une liaison de transport énergétique comme une alimentation électrique, et une liaison d'échange de données par fil conducteur ou par fibre optique, sans que ces exemples ne soient limitatifs ni exhaustifs.

Le robot est dirigé pour nettoyer les surfaces du bassin comme le fond de la piscine et ses surfaces latérales, et effectue ainsi de nombreux déplacements dans le bassin.

Les nombreux déplacements du robot comprennent des rotations du robot sur lui-même ainsi que des trajectoires circulaires qui provoquent des emmêlements et des torsions du câble de liaison.

Ces sollicitations du câble de liaison en accélèrent l'usure, réduisent le volume d'évolution du robot dans le bassin et provoquent des interruptions de la séquence de nettoyage et la nécessité d'intervention d'un opérateur afin de démêler le câble. En effet, l'utilisation d'un dispositif de l'art antérieur conduit en moyenne à 3 à 5 emmêlements pendant un temps de fonctionnement du robot de nettoyage de piscine d'environ 3 heures. Un emmêlement est une boucle torsadée du câble de liaison.

Du fait de ces inconvénients, ces robots de l'art antérieur ne sont pas adaptés pour exécuter une séquence de nettoyage alors que le bassin est recouvert par une bâche souple, ce qui est courant pour une piscine de loisir lorsque celle-ci n'est pas utilisée, c'est-à-dire dans des périodes particulièrement avantageuses pour son nettoyage. En effet, d'une part le robot n'est alors plus visible de l'opérateur qui n'est pas en mesure de détecter un problème d'emmêlement du câble.

Le document US 2014/0253541 décrit un dispositif de guidage d'un câble d'alimentation électrique pour un robot de piscine, lequel dispositif de guidage comporte deux émerillons dont l'un est fixé sur un écumeur flottant, ou « skimmer ». Ce dispositif de l'art antérieur n'empêche pas la partie de câble s'étendant entre le skimmer et le robot de passer sous le câble d'alimentation et de conduire ainsi à un emmêlement.

Le document US 202/0166804 décrit un câble d'alimentation électrique pour un robot de piscine, lequel câble est pourvu d'une pluralité de bouées, de sorte que quelle que soit la position du robot dans la piscine, ledit câble reste suspendu entre deux eaux et n'interfère pas avec les mouvements du robot. Ce mode de réalisation du fait de la présence de bouées ne peut être mis en oeuvre sur un bassin bâché.

### EXPOSÉ DE L'INVENTION

L'invention vise à résoudre les inconvénients de l'art antérieur et concerne à cette fin un dispositif pour le guidage d'un câble de liaison d'un robot immergé, notamment un robot de nettoyage de piscine, à son dispositif de commande et d'alimentation, lequel dispositif de guidage comporte :
a. un raccord comprenant un connecteur tournant, relié d'un côté à une première portion, flottante, du câble de liaison s'étendant du dispositif de commande et d'alimentation audit raccord et de l'autre côté à une seconde portion du câble de liaison s'étendant dudit raccord au robot immergé, lequel connecteur autorise un déplacement relatif en rotation des deux portions de câble autour de leur axe longitudinal lesdits ;
b. un support flottant comprenant :
   bi. un flotteur ;
   bii. une interface de liaison mécanique du connecteur tournant audit flotteur ;
   biii. une coiffe s'étendant au-dessus de la surface lorsque le support flottant est plongé dans un liquide et liée de manière amovible au flotteur ;
c. dans lequel la liaison mécanique entre le flotteur et le raccord tournant est une liaison rotule.

Ainsi, le support flottant permet de guider le câble entre la surface et la profondeur et coopère avec le connecteur tournant autorisant des degrés de liberté selon trois rotation entre les deux portions de câble de liaison, de sorte que le cheminement dudit câble est sensiblement parallèle à la surface de la piscine entre le dispositif de commande et d'alimentation et sensiblement vertical entre le connecteur tournant et le robot.

L'invention est avantageusement mise en oeuvre selon les modes de réalisation exposés ci-après, lesquels sont à considérer individuellement ou selon toute combinaison techniquement opérante.

Avantageusement, la coiffe est une calotte lisse et convexe. Ladite forme de ladite coiffe permet un glissement facile du support flottant sous une bâche.

Avantageusement le flotteur est sensiblement cylindrique, l'axe dudit cylindre étant sensiblement perpendiculaire au plan de flottaison, la liaison mécanique étant située dans l'axe et du côté opposé à la coiffe, le flotteur comprenant une augmentation du diamètre de la surface de flottaison vers la coiffe. Ainsi lorsque la traction exercée sur liaison mécanique comporte une composant non verticale le flotteur tend à se déplacer sur l'eau horizontalement. La composante verticale de cette traction tend à enfoncer le flotteur dans l'eau de manière symétrique par rapport à l'axe du cylindre. L'augmentation de la surface de flottaison au raccordement entre le flotteur et la coiffe offre une résistance accrue à l'enfoncement de sorte que la première portion de câble ne peut pas passer au-dessus du flotteur et engendrer un emmêlement.

Avantageusement le profil du flotteur suit une forme en diabolo. Cette forme permet à la fois d'assurer l'augmentation de poussé de flottaison lorsque le flotteur tend à s'enfoncer dans l'eau et d'offrir une moindre résistance hydrodynamique au déplacement horizontal dudit flotteur

Selon un autre mode de réalisation, la coiffe comprend un plot en saillie constitué d'un matériau flottant. Ce mode de réalisation est adapté à une utilisation du robot dans un bassin non bâché. Ledit plot augmente la flottaison du flotteur lorsque celui-ci tend à s'enfoncer sous l'effet d'une traction verticale et empêche également la première portion de câble de passer du dessus du flotteur.

Avantageusement le flotteur comprend des moyens de liaison amovible de la coiffe permettant de connecter la calotte ou le plot. Ainsi, le même dispositif est adapté à une utilisation en bassin bâché et non bâché.

Selon un mode de réalisation avantageux, le dispositif objet de l'invention comprend :
d. un second connecteur tournant entre le flotteur et la première portion de câble, ledit connecteur tournant autorisant un degré de liberté en rotation selon un axe perpendiculaire à l'axe du cylindre.

Ainsi, le déplacement du flotteur n'engendre pas d'effets de torsion dans la première portion de câble.

Avantageusement, le disposition objet de l'invention comprend :
e. des moyens pour rigidifier la deuxième portion de câble en torsion.

Avantageusement la liaison mécanique du connecteur tournant avec le flotteur est réalisée par une rotule à doigt dont la rotation relative par rapport à l'axe du cylindre est bloquée. Cette disposition empêche l'entraînement du flotteur sous la première portion de câble sous l'effet de la deuxième portion de câble.

### PRÉSENTATION DES FIGURES

L'invention est exposée ci-après selon ses modes de réalisation préférés, nullement limitatifs et en référence aux figures 1 à 3 dans lesquelles :
- La figure 1 montre selon un une vue schématique de face et en coupe partielle, un exemple de réalisation du dispositif objet de l'invention adapté à une utilisation sous bâche ;
- La figure 2 représente selon la même vue que la figure 1, un autre exemple de réalisation du dispositif objet de l'invention comprenant une liaison mécanique du connecteur tournant par une rotule à doigt ;
- et la figure 3 illustre selon la même vue que les précédentes un exemple de mise en oeuvre du dispositif objet de l'invention dans une configuration adaptée à une utilisation dans un bassin non bâché.

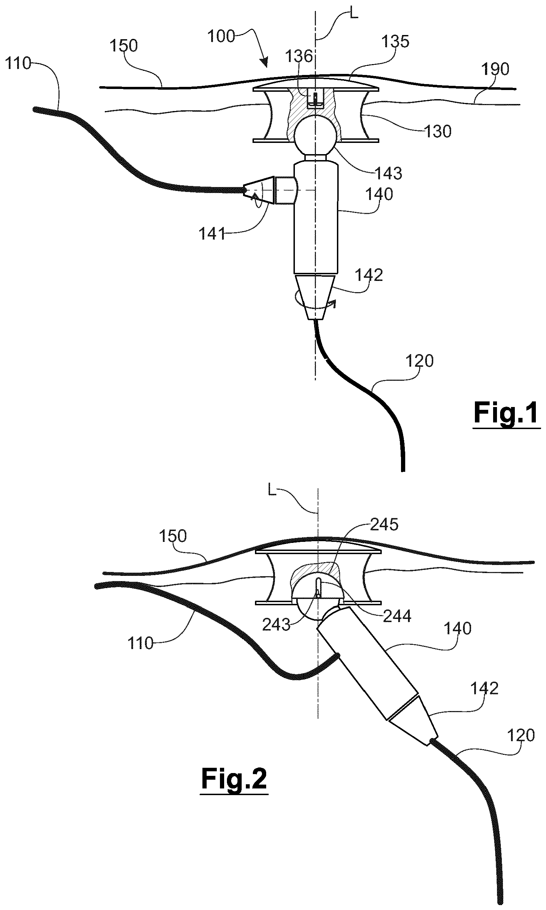

Figure 1, selon un exemple de réalisation, le dispositif objet de l'invention permet de connecter une première (110) portion de câble de liaison d'un robot immergé et une seconde (120) portion de câble. La première (110) portion de câble est flottante et s'étend sensiblement parallèlement à la surface (190) du liquide, entre le dispositif de commande et d'alimentation (non représenté) du robot et un moyen de flottaison (100), et la seconde (120) portion de câble de liaison s'étend sensiblement verticalement entre ledit moyen (100) de flottaison et le robot (non représenté). Le robot est par exemple un robot de nettoyage d'une piscine.

Selon cet exemple de mise en oeuvre dans lequel la piscine présente une profondeur de 3 m, la première (110) portion du câble de liaison est d'une longueur comprise entre 10 m et 15 m et la deuxième (120) portion du câble de liaison est d'une longueur de 3,5 m. Afin d'éviter toute torsion la deuxième portion du câble de liaison est par exemple rigidifiée en torsion par une gaine hélicoïdale permettant de lui conserver une certaine souplesse en flexion.

Selon cet exemple de mise en oeuvre le bassin est recouvert par une bâche (150). Le dispositif (100) de flottaison, comprend un flotteur (130), de forme cylindrique autour d'un axe (L) sensiblement perpendiculaire à la surface (190) du liquide lorsque ledit flotteur (130) y est immergé. Ledit flotteur est par exemple constitué de polystyrène expansé d'une densité comprise entre 15 kg/m³ et 25 kg/m³ La partie supérieure du flotteur comprend une coiffe en forme calotte convexe (135), selon cet exemple de réalisation, coiffe qui est fixée de manière amovible audit flotteur (130), par exemple par des moyens (136) de clipage. Ladite calotte convexe est lisse et constituée ou revêtue avantageusement d'un matériau à faible coefficient de frottement vis-à-vis du matériau constituant la bâche (150). La forme du flotteur (130) est conçue de sorte que son diamètre augmente vers sa partie supérieure, émergée, recevant ladite coiffe, de sorte que la section de flottaison et le volume déplacé augmente lorsque ledit flotteur s'enfonce. Ainsi, le flotteur tend à se stabilise dans une position de flottaison avec l'axe L sensiblement vertical. L'augmentation de la surface de flottaison augmente la force de rappel du flotteur (130) vis-à-vis des axes de tangage et de roulis, perpendiculaires à l'axe L, et tend ainsi à conserver le flotteur en position verticale. Avantageusement le flotteur (130) est en forme de diabolo ce qui permet de bénéficier de l'effet exposé ci-avant tout en réduisant le déplacement d'eau du flotteur en mouvement, en comparaison d'un flotteur cylindrique droit.

Selon cet exemple de réalisation, les portions (110, 120) de câbles de liaison sont liées au flotteur par des connecteurs (141, 142) tournants autour d'axes perpendiculaires. Ces connecteurs tournant assurent la continuité de transmission de l'énergie et des informations entre les deux portions (110, 120) de câble de liaison.

Selon un mode de réalisation alternatif, seul la seconde (120) portion de câble est liée au flotteur par un connecteur (142) tournant.

Lesdits connecteurs tournant sont liés au flotteur (130) par l'intermédiaire d'une pièce (140) support, laquelle pièce support est liée au flotteur (130) par une rotule (143) dans l'axe (L) du cylindre.

Ainsi au voisinage du flotteur, la première portion de câble est maintenue sensiblement parallèle à la surface de l'eau alors que la deuxième portion de câble s'étend sensiblement perpendiculairement à celle-ci. La coopération des moyens de flottaison et des raccords tournant permet de conserver cette configuration quelle que soit la position du robot dans la piscine et quelle que soit la tension exercer par l'un ou l'autre câble. La bâche coopère avec la calotte et le flotteur, la calotte étant, du fait de sa flottaison et du poids de la bâche en contact avec celle-ci de sorte que la première portion de câble ne peut pas passer au-dessus du flotteur (130).

Figure 2, selon un autre exemple de mise en oeuvre seule la deuxième (120) portion de câble de liaison est liée au flotteur par un connecteur (142) tournant.

Selon un mode de réalisation, non exclusif de ce mode de réalisation, la liaison rotule entre la pièce support (140) et le flotteur (130) est comprend une limitation de ses degrés de liberté par un doigt (243) entrant dans une rainure (244) de la calotte (245) d'articulation de la rotule. Ledit doigt (243) empêche la rotule de tourner autour de l'axe (L) du cylindre. Ainsi, les rotations du robot autour d'un axe sensiblement parallèle à cette axe lorsqu'il ne se trouve pas à l'aplomb du flotteur, entraînent ledit flotteur et la première portion flottante du câble de liaison, de sorte que la seconde portion de câble ne peut pas passer sous ladite première portion, en évitant ainsi les risque d'emmêlement des deux portions de câble.

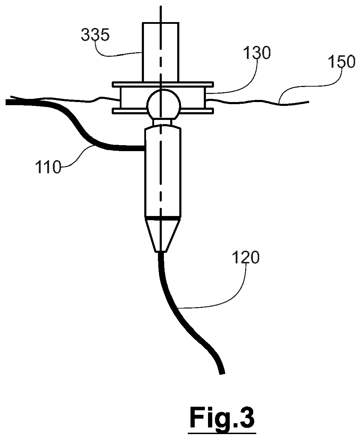

Figure 3, selon un autre mode de mise en oeuvre du dispositif objet de l'invention, adaptée à une utilisation dans un bassin non bâché, la coiffe (335) st constituée d'un plot.. Selon un exemple de réalisation, ledit plot est un tube creux de 4 cm de diamètre et de 12 cm de hauteur, constitué par exemple de polystyrène expansé. Ledit plot est connecté au flotteur (130) par les mêmes moyens de clipage que ceux utilisés pour la calotte convexe. Ce plot (335) permet de repousser le la première portion (110) de câble de liaison même si la traction exercée par la deuxième portion (120) de câble tend à immerger le flotteur, de sorte que la première portion de câble ne peut pas passer au-dessus du flotteur même en l'absence de l'effet de la bâche.

La description ci-avant illustre clairement que par ses différentes caractéristiques et leurs avantages, la présente invention atteint les objectifs visés En particulier, aucun emmêlement de câble n'est constaté après trois heures de fonctionnement d'un robot de nettoyage pourvu d'un tel dispositif.

## Revendications

1. Dispositif pour le guidage d'un câble (110, 120) de liaison d'un robot immergé, notamment un robot de nettoyage de piscine, à son dispositif de commande et d'alimentation, lequel dispositif de guidage comporte :
a. un raccord comprenant un connecteur (141, 142) tournant, relié d'un côté à une première (110) portion, flottante, du câble de liaison s'étendant du dispositif de commande et d'alimentation audit raccord et de l'autre côté à une seconde (120) portion du câble de liaison s'étendant dudit raccord au robot immergé ;
b. un support (100) flottant comprenant :
bi. un flotteur (130) ;
bii. une interface (143, 243) de liaison mécanique du connecteur tournant audit flotteur ;
biii. une coiffe (135, 335) s'étendant au-dessus de la surface lorsque le support flottant est plongé dans un liquide et liée de manière amovible au flotteur ;
c. dans lequel la liaison mécanique entre le flotteur et le raccord tournant est une liaison rotule.

2. Dispositif selon la revendication 1, dans lequel la coiffe est une calotte lisse et convexe.

3. Dispositif selon la revendication 1, dans lequel le flotteur (130) est sensiblement cylindrique, l'axe (L) dudit cylindre étant sensiblement perpendiculaire au plan de flottaison, la liaison mécanique (143, 243) étant située dans l'axe (L) et du côté opposé à la coiffe (135, 235), le flotteur comprenant une augmentation du diamètre vers la coiffe.

4. Dispositif selon la revendication 3, dans lequel le profil du flotteur (130) suit une forme en diabolo

5. Dispositif selon la revendication 1, dans lequel la coiffe comprend un plot (335) en saillie constitué d'un matériau flottant.

6. Dispositif selon la revendication 1, dans lequel le flotteur comprend des moyens (136) de liaison amovible de la coiffe (135, 335)

7. Dispositif selon la revendication 1, comprenant :
d. un second connecteur tournant entre le flotteur et la première portion de câble, ledit connecteur tournant autorisant un degré de liberté en rotation selon un axe perpendiculaire à l'axe du cylindre.

8. Dispositif selon la revendication 1, comprenant :
e. des moyens pour rigidifier la deuxième portion de câble en torsion.

9. Dispositif selon la revendication 1, dans lequel la liaison mécanique du connecteur tournant avec le flotteur est réalisée par une rotule à doigt dont la rotation relative par rapport à l'axe du cylindre est bloquée

## Patentansprüche

1. Vorrichtung zum Führen eines Verbindungskabels (110, 120) für einen untergetauchten Roboter, insbesondere einen Schwimmbadreinigungsroboter, zu seiner Steuer- und Versorgungsvorrichtung, wobei die Führungsvorrichtung umfasst:
a. einen Anschluss, umfassend einen Drehstecker (141, 142), der auf einer Seite mit einem ersten schwimmenden Abschnitt (110) des Verbindungskabels verbunden ist, der sich von der Steuer- und Versorgungsvorrichtung zum Anschluss erstreckt, und auf der anderen Seite mit einem zweiten Abschnitt (120) des Verbindungskabels verbunden ist, der sich vom Anschluss zum untergetauchten Roboter erstreckt;
b. einen schwimmenden Träger (100), umfassend:
bi. einen Schwimmer (130);
bii. eine Schnittstelle (143, 243) zur mechanischen Verbindung des Drehsteckers mit dem Schwimmer;
biii. eine Abdeckung (135, 335), die sich über der Oberfläche erstreckt, wenn der schwimmende Träger in eine Flüssigkeit getaucht und mit dem Schwimmer lösbar verbunden ist;
c. wobei die mechanische Verbindung zwischen dem Schwimmer und dem Drehanschluss eine Kugelgelenkverbindung ist.

2. Vorrichtung nach Anspruch 1, bei der die Abdeckung eine glatte und konvexe Kappe ist.

3. Vorrichtung nach Anspruch 1, bei der der Schwimmer (130) im Wesentlichen zylindrisch ist, wobei die Achse (L) des Zylinders im Wesentlichen auf die Schwimmebene senkrecht ist, wobei die mechanische Verbindung (143, 243) in der Achse (L) und auf der der Abdeckung (135, 235) gegenüberliegenden Seite angeordnet ist, wobei der Schwimmer eine Vergrößerung des Durchmessers zur Abdeckung hin umfasst.

4. Vorrichtung nach Anspruch 3, bei der das Profil des Schwimmers (130) einer Diaboloform folgt.

5. Vorrichtung nach Anspruch 1, bei der die Abdeckung einen aus einem schwimmenden Material bestehenden vorstehenden Stift (335) umfasst.

6. Vorrichtung nach Anspruch 1, bei der der Schwimmer Mittel (136) zur lösbaren Verbindung der Abdeckung (135, 335) umfasst.

7. Vorrichtung nach Anspruch 1, umfassend:
d. einen zweiten Drehstecker zwischen dem Schwimmer und dem ersten Kabelabschnitt, wobei der Drehstecker einen Freiheitsgrad bei Drehung entlang einer Achse senkrecht auf die Achse des Zylinders gestattet.

8. Vorrichtung nach Anspruch 1, umfassend:
e. Mittel zum Versteifen des zweiten Kabelabschnitts bei Torsion.

9. Vorrichtung nach Anspruch 1, bei der die mechanische Verbindung des Drehsteckers mit dem Schwimmer durch ein Kugelfingergelenk verwirklicht ist, dessen relative Drehung in Bezug zur Achse des Zylinders blockiert ist.

## Claims

1. Device for guiding a cable (110, 120) for connecting a submerged robot, in particular a robot for cleaning swimming pools, to its device for controlling and powering it, said guiding device including:
a. a coupling including a rotary connector (141, 142), connected by one side to a first floating portion (110) of the connecting cable extending from the control and power supply device to said coupling and, by the other side, to a second portion (120) of the connecting cable extending from said coupling to the submerged robot;
b. a floating support (100) including:
bi. a float (130);
bii. an interface (143, 243) for mechanically connecting the rotary connector to said float; and
biii. a hood (135, 335) extending above the surface when the floating support is immersed in a liquid and removably connected to the float;
c. in which the mechanical connection between the float and the rotary coupling is a ball-and-socket connection.

2. Device according to Claim 1, in which the hood is a smooth and convex dome.

3. Device according to Claim 1, in which the float (130) is substantially cylindrical, the axis (L) of said cylinder being substantially perpendicular to the flotation plane, the mechanical connection (143, 243) being situated on the axis (L) and on the opposite side to the hood (135, 235), the float having an increased diameter in the direction of the hood.

4. Device according to Claim 3, in which the profile of the float (130) follows a diabolo shape.

5. Device according to Claim 1, in which the hood includes a projecting pillar (335) made of a buoyant material.

6. Device according to Claim 1, in which the float includes means (136) for removably connecting the hood (135, 335).

7. Device according to Claim 1, including:
d. a second rotary connector between the float and the first cable portion, said rotary connector allowing one degree of freedom in rotation about an axis perpendicular to the axis of the cylinder.

8. Device according to Claim 1, including:
e. means for increasing the resistance to twisting of the second cable portion.

9. Device according to Claim 1, in which the mechanical connection of the rotary connector with the float is provided by a ball-and-socket with a finger that is prevented from rotating relative to the axis of the cylinder.
